# EUROPÄISCHE PATENTSCHRIFT

(11) **EP 2 339 297 B1**
(45) Veröffentlichungstag und Bekanntmachung des Hinweises auf die Patenterteilung: **21.08.2013**
(21) Anmeldenummer: 10015554.8
(22) Anmeldetag: 13.12.2010
(51) Int. Cl.: G01C 21/36, G10L 15/26, G09B 29/10

(54) **Verfahren zum Anzeigen einer Mehrzahl auswählbarer Elemente und Vorrichtung zum Durchführen des Verfahrens**
Method for displaying a number of selectable elements and device for executing the method
Procédé d'affichage d'une multitude d'éléments sélectionnables et dispositif d'exécution du procédé

(30) Priorität: 22.12.2009 DE 102009059981
(43) Veröffentlichungstag der Anmeldung: 29.06.2011
(73) Patentinhaber: Volkswagen Aktiengesellschaft, 38440 Wolfsburg (DE)
(72) Erfinder: Wäller, Christoph, 38106 Braunschweig (DE); Mischke, Michael, 30167 Hannover (DE); Neugebauer, Moritz, 10439 Berlin (DE); Ehrke, Jens, 38550 Isenbüttel (DE); Bohrer, Lorenz, 10623 Berlin (DE); Oel, Peter, Dr., 38165 Lehre (DE)

(56) Entgegenhaltungen:
- EP-A1- 1 310 767
- EP-A2- 1 930 696
- DE-A1-102008 008 948
- US-B1- 7 321 824

## Beschreibung

Die Erfindung betrifft ein Verfahren zum Anzeigen einer Mehrzahl auswählbarer Elemente, die sich von einer Vorrichtung verarbeiten und auf einer Anzeigeeinrichtung in einer Kartendarstellung anzeigen lassen, sowie eine Vorrichtung zum Durchführen des Verfahrens.

Es sind Eingabeverfahren für Ortsnamen bekannt, insbesondere zur Zielorteingabe für Navigationseinrichtungen in Kraftfahrzeugen. Die Ortsnamen werden beispielsweise über eine Tastatur oder eine Spracherkennungseinrichtung in die Navigationseinrichtung eingegeben beziehungsweise aus einer in einer Anzeigeeinrichtung dargestellten Liste ausgewählt. Mitunter treten Ortsnamen auf, denen nicht eindeutig ein Ort zugeordnet werden kann, da mehrere der gespeicherten Orte den gleichen Namen tragen. An eine erste Eingabe durch den Benutzer muss sich in diesem Fall eine Mehrdeutigkeitsauflösung anschließen.

Aus der DE 103 13 222 A1 ist eine Navigationseinrichtung bekannt, die für den Fall, dass einem eingegebenen Ortsnamen nicht eindeutig ein Ort zugeordnet werden kann, eine Mehrdeutigkeitsauflösung dadurch erfolgt, dass einem Betrachter bildliche Informationen angezeigt werden, die ihm eine Auswahl des tatsächlich gewünschten Fahrziels erleichtert. Hierzu werden Grafiken angezeigt, die jeweils einen Ort charakterisieren. Der Benutzer kann mit Hilfe der Grafiken eine einfache Unterscheidung zwischen den verschiedenen Orten gleichen Namens treffen.

In der DE 10 2008 008 948 A1 werden Ziele per Spracheingabe ermittelt und auf einer Karte angezeigt. Die Schriften US 7 321 824 B1, EP 1 930 696 A2 und EP 1 310 767 offenbaren vergrößerte Karten ausschnitte für einen oder mehrere Orte auf einer Karte.

Aufgabe der vorliegenden Erfindung ist es, ein alternatives Verfahren zum Anzeigen einer Mehrzahl auswählbarer Elemente, die sich von einer Vorrichtung verarbeiten und auf einer Anzeigeeinrichtung in einer Kartendarstellung anzeigen lassen, bereitzustellen. Ferner ist es Aufgabe der vorliegenden Erfindung, eine Vorrichtung zum Durchführen dieses Verfahrens bereitzustellen.

Die Aufgabe wird gelöst durch ein Verfahren mit den Merkmalen von Anspruch 1 sowie einer Vorrichtung mit den Merkmalen von Anspruch 6.

Vorteilhafte Weiterbildungen ergeben sich aus den Unteransprüchen, der Beschreibung und den Figuren.

Die Erfindung zeichnet sich dadurch aus, dass die Grafiken Umgebungen der auswählbaren Elemente umfassen, die in größeren Maßstäben als der auf der Anzeigeeinrichtung angezeigte Kartenausschnitt eingeblendet werden. Dadurch entsteht der Eindruck, als blicke der Betrachter bei den Grafiken durch Lupen auf die Umgebungen der Elemente. Die vergrößerte Darstellung der Elemente und deren Umgebungen ermöglichen es dem Benutzer, sich einfacher und schneller zu orientieren und das richtige Element auszuwählen. Hierdurch wird der Bedienkomfort für den Benutzer erhöht. Die Maßstäbe der Grafiken brauchen nicht voneinander verschieden zu sein. Entscheidend ist nur, dass die Maßstäbe der Grafiken alle größer sind als der Maßstab des angezeigten Kartenausschnittes.

Vorrichtung im Sinne dieser Erfindung ist insbesondere eine elektronische Einrichtung in einem Kraftfahrzeug, wie zum Beispiel eine Navigations-, Multimedia-, Telefon- oder Infotainmenteinrichtung. Mehrere dieser Einrichtungen können sowohl separat oder in einer Multifunktionseinrichtung integriert ausgebildet sein.

Anzeigeeinrichtung im Sinne dieser Erfindung ist insbesondere eine frei programmierbare Flüssigkristallanzeige, wie etwas ein LCD (Liquid Cristal Display) oder TFT-Display (Thin Film Transistor). Die Anzeigeeinrichtung kann auch als berührungsempfindlicher Bildschirm (sogenannter Touchscreen) ausgebildet sein.

Elemente im Sinne dieser Erfindung sind insbesondere Adressen einer digitalen Straßenkarte. Eine Adresse im Sinne dieser Erfindung ist weit zu verstehen und kann unterschiedlich detailliert sein. Sie umfasst beispielsweise einen Ortsnamen, einen Straßennamen und/oder eine Hausnummer. Denkbar ist auch, dass die Adresse eine Sehenswürdigkeit (sogenannten Point of Interest, POI) bezeichnet.

Spracherkennungseinrichtung im Sinne dieser Erfindung ist insbesondere ein sogenannter Multi-Slot-Spracherkenner, der mehrteilige gesprochene Elemente (beispielsweise Ortsname, Straßenname und Hausnummer) verarbeiten kann. Bekannt sind insbesondere serielle und parallele Multi-Slot-Erkenner, deren Funktionsweisen beschrieben sind in: Steffen Rhinow, Multislot-Eingaben bei sprachbedienten Navigationsgeräten VDM Verlag Dr. Müller, Saarbrücken 2008.

Die Erfindung betrifft einen Fall, in dem die Spracherkennungseinrichtung mindestens zwei auswählbare Elemente aus einem gesprochenen Element erzeugt. Beispielsweise spricht der Benutzer das Wort "Neustadt" als Zielort für eine Navigation aus. Da es mehrere Orte mit dem Namensbestandteil Neustadt gibt, kann die Spracherkennungseinrichtung kein eindeutiges Ergebnis liefern, sondern nur eine Mehrzahl auswählbarer Orte mit dem Namensbestandteil "Neustadt". Zu dieser Mehrzahl auswählbarer Orte werden sodann Grafiken erzeugt und auf der Anzeigeeinrichtung eingeblendet.

Die Mehrzahl auswählbarer Elemente braucht nicht alle Elemente zu umfassen, die die Spracherkennungseinrichtung erzeugt. Die Anzahl der auswählbaren Elemente kann auch beschränkt werden, etwa um die Darstellung auf der Anzeigeeinrichtung nicht unübersichtlich werden zu lassen. Es ist also möglich, dass die Mehrzahl auswählbarer Elemente nur eine Teilmenge aller von der Spracherkennungseinrichtung erzeugten Elemente darstellt.

In einer Ausführungsform werden die Grafiken mit einem räumlichen Bezug zu den Elementen angezeigt. Der räumliche Bezug kann beispielsweise dadurch erfolgen, dass das Element in einem Zentrum der Grafik (bei einer kreisförmigen Grafik der Mittelpunkt) angezeigt wird. Dadurch entsteht der Eindruck, dass die Grafik wie eine Lupe über dem auf der Anzeigeeinrichtung dargestellten Kartenausschnitt liegt. Der räumliche Bezug lässt sich aber auch durch ein Zeigersymbol herstellen. Darunter ist etwa zu verstehen, dass die Grafik außerhalb des auf dem Kartenausschnitt gezeigten Elementes platziert wird und durch einen Zeiger (etwa einen Pfeil, der auf das Element zeigt) an dem Element verankert wird. Durch den räumlichen Bezug kann sich der Benutzer einfach und schnell orientieren. Bei einer digitalen Straßenkarte einer Navigationseinrichtung erkennt der Benutzer zum Beispiel die Lage der auswählbaren Orte in einem größeren räumlichen Kontext, der auf der Anzeigeeinrichtung dargestellt wird.

In einer weiteren Ausführungsform können die Elemente über die ihnen zugeordneten Grafiken ausgewählt werden. Denkbar ist, dass die Anzeigeeinrichtung als Touchscreen ausgebildet ist, bei dem die Bereiche der Anzeigefläche, an denen die Grafiken angezeigt werden, als Bedienelemente zur Auswahl der Elemente ausgebildet sind. Denkbar ist jedoch auch, dass über andere Bedienelemente eine Auswahl getroffen wird, wie beispielsweise über eine Sprachauswahl oder einen Dreh-/Drücksteller am Multifunktionslenkrad. Die Auswahl der Elemente über die zugeordneten Grafiken ist für den Benutzer besonders einfach und anschaulich.

In einer weiteren Ausführungsform werden die Erkennungswahrscheinlichkeiten der Elemente über die ihnen zugeordneten Grafiken kenntlich gemacht. Die Spracherkennungseinrichtung ordnet einem gesprochenen Element in der Regel nicht eindeutig ein in einem Wörterbuch gespeichertes Element zu, sondern erzeugt mit Hilfe statistischer Methoden eine Liste mit mehreren möglichen Elementen (sogenannte Treffer). Jedem Element der Liste ist eine bestimmte Erkennungswahrscheinlichkeit (auch Konfidenzmaß genannt) zugeordnet. Die Treffer lassen sich nach ihren Erkennungswahrscheinlichkeiten ordnen, beispielsweise nach absteigenden Erkennungswahrscheinlichkeiten. Die Grafiken können dann mit den Platzierungen der Treffer innerhalb dieser Ordnung versehen sein, also die Nummer eins für die höchste Erkennungswahrscheinlichkeit, die Nummer zwei für die zweithöchste Erkennungswahrscheinlichkeit und so weiter.

Die erfindungsgemäße Vorrichtung ist ausgebildet, das erfindungsgemäße Verfahren durchführen. Es weist somit die gleichen Vorteile wie das erfindungsgemäße Verfahren auf, so dass auf die vorstehenden Ausführungen verwiesen wird.

Die Erfindung wird anhand der in den nachfolgenden Figuren dargestellten Ausführungsbeispielen näher erläutert.

Es zeigen:
Figuren 1 - 4 eine erste Ausführungsform der erfindungsgemäßen Vorrichtung und
Figur 5 eine zweite Ausführungsform der erfindungsgemäßen Vorrichtung.

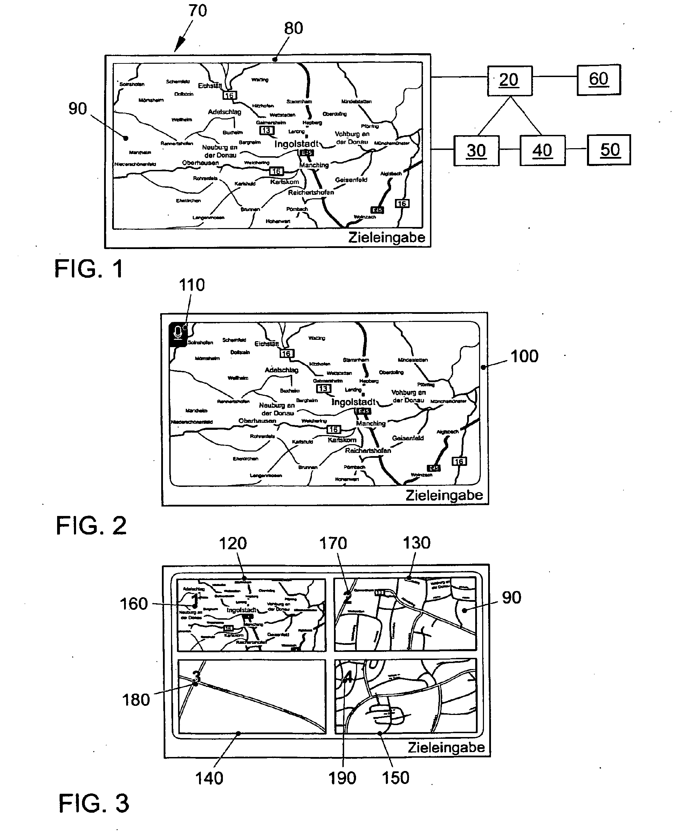

Figur 1 zeigt den prinzipiellen Aufbau einer erfindungsgemäßen Vorrichtung 10, die als Navigationseinrichtung ausgebildet ist. Die Vorrichtung 10 umfasst eine Steuereinrichtung 20, eine Speichereinrichtung 30, eine Spracherkennungseinrichtung 40, ein Mikrofon 50, einen Lautsprecher 60 und eine Anzeigeeinrichtung 70.

Die Steuereinrichtung 20 nimmt unterschiedliche Aufgaben wahr. So führt sie sämtliche mit der Navigation erforderlichen Aufgaben aus. Hierzu gehören die Berechnung einer Route, die Steuerung der Anzeigeeinrichtung 70, die Steuerung der Spracherkennungseinrichtung 40 und der Verwaltung der Speichereinrichtung 30.

Die Speichereinrichtung 30 enthält alle für die Navigationsaufgaben erforderlichen Daten, wie etwa eine digitale Straßenkarte.

Die Spracherkennungseinrichtung 40 ist als Multi-Slot-Spracherkenner ausgeführt. Das erforderliche Wörterbuch ist in der Speichereinrichtung 30 abgelegt. Die Spracherkennungseinrichtung 40 ist mit dem Mikrofon 50 verbunden. Über das Mikrofon 50 werden gesprochene Adressen empfangen und an die Spracherkennungseinrichtung 40 übermittelt. Die Spracherkennungseinrichtung 40 verarbeitet die gesprochene Adresse und erzeugt eine Liste mit möglichen Orten oder POI. Die Liste wird an die Steuereinrichtung 20 übermittelt.

Die Anzeigeeinrichtung 70 umfasst eine Anzeigefläche 80, die der optischen Widergabe von Informationen dient. In Figur 1 ist ein Ausschnitt einer digitalen Straßenkarte 90 zu erkennen.

Figur 2 zeigt die Darstellung aus Figur 1, bei der zusätzlich auf der Anzeigefläche 80 ein rechteckiger Rahmen 100 mit einem Mikrofonsymbol 110 in der oberen linken Ecke des Rahmens 100 angezeigt wird. Unten rechts auf der Anzeigefläche 80 ist das Wort "Zieieingabe" hervorgehoben dargestellt. Dem Benutzer wird durch das Mikrofonsymbol 110 angezeigt, dass die Spracherkennungseinrichtung 40 bereit ist, gesprochene Elemente zu empfangen. Durch das hervorgehobene Wort "Zieteingabe" wird dem Benutzer mitgeteilt, dass die Vorrichtung 10 die Angabe eines Zielortes für die Zielführung erwartet. Dies kann etwa ein Ortsname oder die Bezeichnung eines POI sein.

Figur 3 zeigt die Anzeigefläche 80, nachdem die Spracherkennungseinrichtung 40 mindestens vier Orte ermittelt hat, die der Benutzer mit dem gesprochenen Zielort gemeint haben könnte. Jedem dieser vier Orte wird eine Grafik 120, 130, 140, 150 zugeordnet.

Die Grafiken 120 bis 150 umfassen jeweils einen Ort und eine Umgebung des Ortes. Die Grafiken 120 bis 150 sind vorwiegend als rechteckige Kartenausschnitte realisiert. Es kämen jedoch auch andere Formen, etwa kreisförmige oder ovale in Betracht. Die Grafiken 120 bis 150 sind nach ihren Erkennungswahrscheinlichkeiten im Uhrzeigersinn angeordnet. Die Anordnung ist durch eine Zahl 160, 170, 180, 190 verdeutlicht. Die Zahlen 160 bis 190 sind jeweils oben links in den Grafiken 120 bis 150 angeordnet. Die "1" deutet beispielsweise auf die höchste Erkennungswahrscheinlichkeit und die "4" auf die niedrigste Erkennungswahrscheinlichkeit der Orte der Grafiken 120 bis 150 hin.

Es ist zu erkennen, dass die Grafiken 120 bis 150 über die Straßenkarte 90 gelegt sind, denn die Straßenkarte 90 ist zwischen den Grafiken 120 bis 150 und außerhalb der Grafiken 120 bis 150 zu erkennen. Die in den Grafiken 120 bis 150 dargestellten Kartenausschnitte haben alle einen größeren Maßstab als die auf der Anzeigefläche 80 dargestellte Straßenkarte 90.

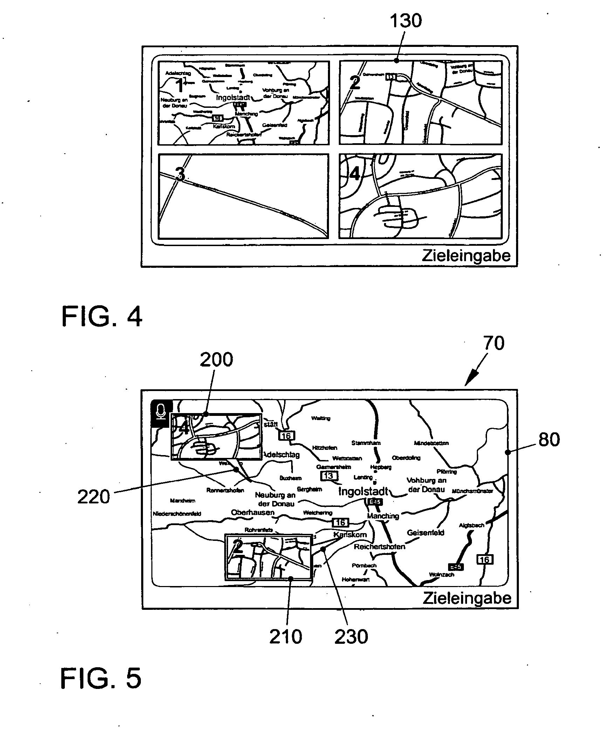

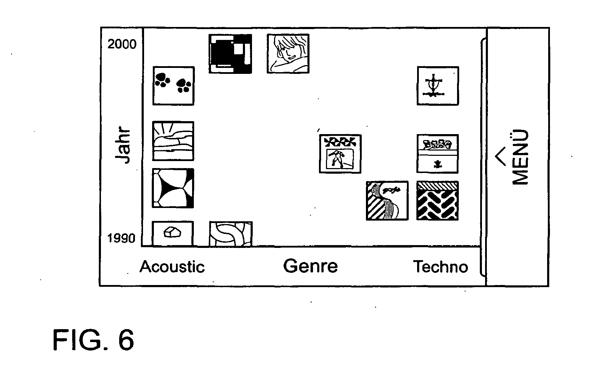

Figur 4 zeigt die Darstellung aus Figur 3, bei der zusätzlich die Grafik 130 markiert ist. Die Markierung besteht darin, dass die Grafik 130 transparent eingefärbt ist. Transparent heißt, dass der in der Grafik 130 dargestellte Kartenausschnitt noch zu sehen ist, die Anzeige jedoch so wirkt, als wäre eine farblich transparente Folie vor die als Fenster erscheinende Grafik 130 gelegt worden. Diese Markierung zeigt dem Benutzer an, dass er den durch die Grafik 130 repräsentierten Ort ausgewählt hat oder durch eine Bestätigungshandlung (zum Beispiel durch Drücken eines Dreh/Drückstellers) auswählen kann. Dieser Ort wird ― gegebenenfalls nach der Bestätigungshandlung - für die anschließende Zielführung als Zielort verwendet. Im Rahmen der Zielführung können Zielführungshinweise über den Lautsprecher 60 an den Benutzer ausgegeben werden.

Figur 5 zeigt eine alternative Ausführungsform der erfindungsgemäßen Vorrichtung, wobei hier der Einfachheit halber nur die Anzeigeeinrichtung 70 und deren Anzeigefläche 80 dargestellt sind. Im Unterschied zu der Ausführungsform in den Figuren 1 bis 4 wird hier eine alternative Anzeige von Grafiken 200, 210 für erkannte Orte angegeben. Die Grafiken 200, 210 werden mit einem räumlichen Bezug zu den auf der Straßenkarte 90 dargestellten Orten angezeigt. Die Grafiken 200, 210 umfassen dreieckige 220, 230 Zeiger, deren freie Spitzen auf die erkannten Orte zeigen. Als Zeiger kämen auch andere Symbole in Betracht, wie zum Beispiel Pfeile.

Die Grafiken 200, 2.10 sind so angeordnet, dass sie sich nicht überlappen. Dazu kann es erforderlich sein, die Anzahl der gleichzeitig auf der Anzeigefläche 80 angezeigten Grafiken 200, 210 zu begrenzen, also nur einen Teil der von der Spracherkennungseinrichtung 40 erzeugten Treffer darzustellen. Dies kann etwa durch eine sinnvolle Auswahl des Ausschnittes der Straßenkarte 90 erfolgen.

Es ist zu erkennen, dass die Grafiken 200, 210 in Bezug auf ihre Erkennungswahrscheinlichkeiten mit den Zahlen "2" und "4" kenntlich gemacht sind. Es fällt auf, dass von mindestens vier möglichen Orten nur zwei dargestellt sind, nämlich die Orte mit der zweithöchsten (Zahl "2") und vierthöchsten (Zahl "4") Erkennungswahrscheinlichkeit. Die Auswahl gerade dieser beiden Orte hängt damit zusammen, dass der Maßstab der Straßenkarte 90 möglichst groß sein sollte und daher zunächst die beiden Orte angezeigt werden, die am dichtesten beieinander liegen. Es wäre jedoch auch denkbar, dass zunächst diejenigen Orte angezeigt werden, die dem aktuellen Standort am nächsten liegen.

### Bezugszeichenliste

- 10: Vorrichtung
- 20: Steuereinrichtung
- 30: Speichereinrichtung
- 40: Spracherkennungseinrichtung
- 50: Mikrofon
- 60: Lautsprecher
- 70: Anzeigeeinrichtung
- 80: Anzeigefläche
- 90: Straßenkarte
- 100: Rahmen
- 110: Mikrofonsymbol
- 120-150: Grafiken
- 160-190: Zahlen
- 200-210: Grafiken
- 220-230: Zeiger

## Patentansprüche

1. Verfahren zum Anzeigen einer Mehrzahl von Elementen, die sich von einer Vorrichtung (10) verarbeiten und auf einer Anzeigeeinrichtung (70) in einer Kartendarstellung anzeigen lassen, bei dem
- die Mehrzahl der Elemente mittels einer Spracherkennungseinrichtung (40) aus einem von einem Benutzer gesprochenen Element erzeugt wird,
- zu jedem Element eine Grafik (120 - 150, 200, 210) erzeugt wird,
- auf der Anzeigeeinrichtung (70) ein Kartenausschnitt aller Elemente in einem Maßstab angezeigt wird,
**dadurch gekennzeichnet, dass**
- die Elemente durch einen Benutzer auswählbar sind,
- die Grafik das auswählbare Element und eine Umgebung des auswählbaren Elementes umfasst,
- die Grafiken (120 - 150, 200, 210) mit größeren Maßstäben auf der Anzeigeeinrichtung (70) eingeblendet werden als der Maßstab des Kartenschnittes.

2. Verfahren nach Anspruch 1, **dadurch gekennzeichnet, dass** die Grafiken (120 - 150, 200, 210) mit räumlichem Bezug zu den Elementen angezeigt werden.

3. Verfahren nach einem der vorstehenden Ansprüche, **dadurch gekennzeichnet, dass** die Elemente über die ihnen zugeordneten Grafiken (120 - 150, 200, 210) ausgewählt werden können.

4. Verfahren nach einem der vorstehenden Ansprüche, **dadurch gekennzeichnet, dass** die Erkennungswahrscheinlichkeiten der Elemente in den Grafiken (120 - 150, 200, 210) kenntlich gemacht werden.

5. Verfahren nach einem der vorstehenden Ansprüche, **dadurch gekennzeichnet, dass** die Vorrichtung als Navigationseinrichtung für ein Kraftfahrzeug ausgebildet ist, die Kartendarstellung als Darstellung einer digitalen Straßenkarte (90) realisiert ist und den Elementen Orte zugeordnet sind.

6. Vorrichtung zum Durchführen eines der vorstehenden Verfahren mit einer Anzeigeeinrichtung (70) zum Anzeigen der Kartendarstellung, einer Steuereinrichtung (20) zum Verarbeiten der Elemente und zum Ansteuern der Anzeigeeinrichtung (70), einer Spracherkennungseinrichtung (40) zum Erzeugen der Mehrzahl der durch einen Benutzer auswählbaren Elemente aus dem von einem Benutzer gesprochenen Element, wobei die Steuereinrichtung (20) ausgebildet ist, zu jedem auswählbaren Element eine Grafik (120 - 150, 200, 210) zu erzeugen, die das auswählbare Element und eine Umgebung des auswählbaren Elementes umfasst, die Anzeigeeinrichtung (70) so anzusteuern, dass ein Kartenausschnitt aller Elemente in einem Maßstab angezeigt wird und die Grafiken (120 -150, 200, 210) in größerem Maßstab auf der Anzeigeeinrichtung eingeblendet werden als der Maßstab des Kartenausschnittes.

7. Vorrichtung nach Anspruch 6, **dadurch gekennzeichnet, dass** die Grafiken (120 - 150, 200, 210) mit räumlichem Bezug zu den Elementen anzeigbar sind.

8. Vorrichtung nach Anspruch 6 oder 7, **dadurch gekennzeichnet, dass** die Elemente über die ihnen zugeordneten Grafiken (120 - 150, 200, 210) auswählbar sind.

9. Vorrichtung nach einem der vorstehenden Ansprüche, **dadurch gekennzeichnet, dass** die Erkennungswahrscheinlichkeiten der Elemente in den Grafiken (120 -150, 200, 210) kenntlich machbar sind.

10. Vorrichtung nach einem der vorstehenden Ansprüche, **dadurch gekennzeichnet, dass** die Einrichtung als Navigationseinrichtung für ein Kraftfahrzeug ausgebildet ist, die Kartendarstellung als Darstellung einer digitalen Straßenkarte (90) realisiert ist und den Elementen Orte zugeordnet sind.

## Claims

1. Method for displaying a plurality of elements that can be processed by an apparatus (10) and displayed on a display device (70) in a map presentation, in which
- the plurality of elements is produced by means of a voice recognition device (40) from an element that is spoken by a user,
- a graphic (120 - 150, 200, 210) is produced for each element,
- a map detail for all the elements is displayed on the display device (70) using a scale,
**characterized in that**
- the elements can be selected by a user,
- the graphic comprises the selectable element and surroundings of the selectable element,
- the graphics (120 - 150, 200, 210) are shown on the display device (70) using larger scales than the scale of the map detail.

2. Method according to Claim 1, **characterized in that** the graphics (120 - 150, 200, 210) are displayed with the physical relationship to the elements.

3. Method according to either of the preceding claims, **characterized in that** the elements can be selected using their associated graphics (120 - 150, 200, 210) .

4. Method according to one of the preceding claims, **characterized in that** the probabilities of recognition of the elements are identified in the graphics (120 - 150, 200, 210).

5. Method according to one of the preceding claims, **characterized in that** the apparatus is in the form of a navigation device for a motor vehicle, the map presentation is implemented as a presentation of a digital road map (90) and the elements have associated locations.

6. Apparatus for carrying out one of the preceding methods having a display device (70) for displaying the map presentation, a control device (20) for processing the elements and for actuating the display device (70), a voice recognition device (40) for producing the plurality of elements that can be selected by a user from the element that is spoken by a user, wherein the control device (20) is designed to produce a graphic (120 - 150, 200, 210) for each selectable element, which graphic comprises the selectable element and surroundings of the selectable element, and to actuate the display device (70) such that a map detail for all the elements is displayed using a scale and the graphics (120 - 150, 200, 210) are shown on the display device using a larger scale than the scale of the map detail.

7. Apparatus according to Claim 6, **characterized in that** the graphics (120 - 150, 200, 210) can be displayed with the physical relationship to the elements.

8. Apparatus according to Claim 6 or 7, **characterized in that** the elements can be selected using their associated graphics (120 - 150, 200, 210).

9. Apparatus according to one of the preceding claims, **characterized in that** the probabilities of recognition of the elements can be identified in the graphics (120 - 150, 200, 210).

10. Apparatus according to one of the preceding claims, **characterized in that** the device is in the form of a navigation device for a motor vehicle, the map presentation is implemented as a presentation of a digital road map (90) and the elements have associated locations.

## Revendications

1. Procédé d'affichage d'une multitude d'éléments pouvant être traités par un dispositif (10) et être affichés sur un dispositif d'affichage (70) dans une représentation de carte, dans lequel :
- la multitude des éléments est produite à l'aide d'un dispositif de reconnaissance vocale (40) à partir d'un élément prononcé par un utilisateur ;
- un graphique (120 - 150, 200, 210) est produit pour chaque élément ;
- un détouré de carte de tous les éléments est affiché dans une échelle du dispositif d'affichage (70) ;
**caractérisé en ce que** :
- les éléments peuvent être sélectionnés par un utilisateur ;
- le graphique comprend l'élément sélectionnable et un environnement de l'élément sélectionnable ;
- les graphiques (120 - 150, 200, 210) sont fondus sur le dispositif d'affichage (70) avec des échelles plus grandes que l'échelle de la découpe de carte.

2. Procédé selon la revendication 1, **caractérisé en ce que** les graphiques (120 - 150, 200, 210) sont affichés avec une relation spatiale par rapport aux éléments.

3. Procédé selon l'une quelconque des revendications précédentes, **caractérisé en ce que** les éléments peuvent être sélectionnés via les graphiques (120 - 150, 200, 210) leur étant associés.

4. Procédé selon l'une quelconque des revendications précédentes, **caractérisé en ce que** les probabilités de reconnaissance des éléments sont indiquées dans les graphiques (120 - 150, 200, 210).

5. Procédé selon l'une quelconque des revendications précédentes, **caractérisé en ce que** le dispositif prend la forme d'un dispositif de navigation pour un véhicule automobile prenant la forme d'une représentation de carte sous la forme d'une représentation de carte de rues (90) numérique et des lieux étant associés aux éléments.

6. Dispositif d'exécution du procédé précédent doté d'un dispositif d'affichage (70) permettant d'afficher la représentation de carte, d'un dispositif de commande (20) permettant de traiter les éléments et de commander le dispositif d'affichage (70), d'un dispositif de reconnaissance vocale (40) permettant de produire la multitude des éléments pouvant être sélectionnés par un utilisateur à partir d'un élément prononcé par un utilisateur, le dispositif de commande (20) étant conçu pour produire un graphique (120 - 150, 200, 210) pour chaque élément sélectionnable comprenant l'élément sélectionnable et un environnement de l'élément sélectionnable, le dispositif d'affichage (70) pouvant être commandé de telle sorte qu'un détouré de carte de tous les éléments est affiché à une échelle et que les graphiques (120 - 150, 200, 210) sont fondus sur le dispositif d'affichage à plus grande échelle que l'échelle du détouré de carte.

7. Dispositif selon la revendication 6, **caractérisé en ce que** les graphiques (120 - 150, 200, 210) peuvent être affichés avec une relation spatiale par rapport aux éléments.

8. Dispositif selon la revendication 6 ou 7, **caractérisé en ce que** les éléments peuvent être sélectionnés via les graphiques (120 - 150, 200, 210) leur étant associés.

9. Dispositif selon l'une quelconque des revendications précédentes, **caractérisé en ce que** les probabilités de reconnaissance des éléments sont indiquées dans les graphiques (120 - 150, 200, 210).

10. Dispositif selon l'une quelconque des revendications précédentes, **caractérisé en ce que** le dispositif prend la forme d'un dispositif de navigation pour un véhicule automobile prenant la forme d'une représentation de carte sous la forme d'une représentation de carte de rues (90) numérique et des lieux étant associés aux éléments.
